# EUROPÄISCHE PATENTSCHRIFT

(11) **EP 4 696 887 B1**
(45) Veröffentlichungstag und Bekanntmachung des Hinweises auf die Patenterteilung: **30.09.2026**
(21) Anmeldenummer: 25191193.9
(22) Anmeldetag: 23.07.2025
(51) Int. Cl.: F04B 1/146, F04B 1/29, F04B 1/30, F03C 1/06, F03C 1/40, E02F 9/22, F16H 61/4148, F16H 61/431, F16H 61/433

(54) **HYDROSTATISCHE AXIALKOLBENMASCHINE**
HYDROSTATIC AXIAL PISTON MACHINE
MACHINE HYDROSTATIQUE À PISTONS AXIAUX

(30) Priorität: 12.08.2024 DE 102024122983; 12.11.2024 DE 102024132971
(43) Veröffentlichungstag der Anmeldung: 18.02.2026
(73) Patentinhaber: LHY Powertrain GmbH & Co. KG, 63741 Aschaffenburg (DE)
(72) Erfinder: Krittian, Lukas, 63739 Aschaffenburg (DE); Dierkes, Thomas, 63743 Aschaffenburg (DE); Keller, Sven, 63906 Erlenbach am Main (DE)
(74) Vertreter: Patentship Patentanwaltgesellschaft

(56) Entgegenhaltungen:
- DE-A1- 102011 107 222
- DE-A1- 102012 216 630
- DE-B4- 102014 109 205

## Beschreibung

Die Erfindung betrifft eine hydrostatische Axialkolbenmaschine, insbesondere Axialkolbenpumpe, mit verstellbarem Verdrängervolumen, wobei das Verdrängervolumen mittels einer Stelleinrichtung einstellbar ist, wobei die Stelleinrichtung eine Stellkolbeneinrichtung aufweist, die mindestens einen Stelldruckraum aufweist, wobei die Stelleinrichtung mindestens ein Stelldruckventil, insbesondere ein Druckminderventil, aufweist, das ausgebildet ist, einen den Stelldruckraum der Stellkolbeneinrichtung beaufschlagenden Stelldruck zu erzeugen, wobei das Stelldruckventil an einem ersten Anschluss mit einer Steuerdruckversorgungseinrichtung in Verbindung steht, an einem zweiten Anschluss mit einer zum Stelldruckraum geführten Stelldruckleitung verbunden ist und an einem dritten Anschluss mit einem Behälter verbunden ist, wobei das Stelldruckventil von einer Ansteuereinrichtung, beispielsweise einem Magnet, in Richtung einer den ersten Anschluss mit dem zweiten Anschluss verbindenden ersten Steuerstellung beaufschlagt ist und von dem in der Stelldruckleitung anstehenden Stelldruck in Richtung einer den zweiten Anschluss mit dem dritten Anschluss verbindenden zweiten Steuerstellung beaufschlagt ist.

Aus der DE 10 2011 107 222 A1 ist in der Figur 1 eine gattungsgemäße hydrostatische Axialkolbenmaschinen mit den Merkmalen des Oberbegriffs des Patentanspruchs 1 bekannt.

Derartige hydrostatische Axialkolbenmaschinen mit veränderbarem Verdrängervolumen, die beispielsweise im geschlossenen Kreislauf betrieben sind, werden als Pumpen oder Motoren beispielsweise in Fahrantrieben von mobilen Arbeitsmaschinen oder in Drehwerksantrieben von Baggern verwendet. Mit der Stelleinrichtung kann das Verdrängervolumen der Axialkolbenmaschine verändert werden. Zur Veränderung und Einstellung des Verdrängervolumens ist eine Stellkolbeneinrichtung vorgesehen, die mindestens einen Stelldruckraum aufweist, zu dessen Beaufschlagung mit einem Stelldruck ein Stelldruckventil vorgesehen ist. Das Stelldruckventil ist bei bekannten Axialkolbenmaschinen als Druckminderventil, beispielsweise Proportional-Druckminderventil, ausgebildet, das aus einem Steuerdruck einer Steuerdruckerzeugungseinrichtung den Stelldruck zur Betätigung der Stellkolbeneinrichtung erzeugt. Das Stelldruckventil steht an einem ersten Anschluss mit einer Steuerdruckversorgungseinrichtung in Verbindung, an einem zweiten Anschluss mit einer zum Stelldruckraum geführten Stelldruckleitung und an einem dritten Anschluss mit einem Behälter. Bei bekannten Axialkolbenmaschine ist das Stelldruckventil von einer Ansteuereinrichtung, beispielsweise einem Proportional-Magnet, in Richtung einer den ersten Anschluss mit dem zweiten Anschluss verbindenden ersten Steuerstellung beaufschlagt und von dem in der Stelldruckleitung anstehenden Stelldruck in Richtung einer den zweiten Anschluss mit dem dritten Anschluss verbindenden zweiten Steuerstellung beaufschlagt. Mit einem derartigen Stelldruckventil kann ein Stelldruck erzeugt werden, der proportional zu dem Ansteuerstrom des Proportional-Magneten ist, wodurch das Verdrängervolumen der Axialkolbenmaschine proportional zu dem Ansteuerstrom des Proportional-Magneten eingestellt und gesteuert werden kann.

Bei bekannten Stelldruckventilen weist das Stelldruckventil einen als Stufenkolben ausgebildeten Steuerschieber auf, der in einer als Stufenbohrung ausgebildeten Gehäusebohrung eines Ventilgehäuses längsverschiebbar angeordnet ist. Die Ausführung des Steuerschiebers als Stufenkolben und der Gehäusebohrung als Stufenbohrung ist erforderlich, um eine in der Fläche verkleinerte Steuerfläche zu erzeugen, die von dem in der Stelldruckleitung anstehenden Stelldruck beaufschlagt ist, der das Stelldruckventil in Richtung der den zweiten Anschluss mit dem dritten Anschluss verbindenden zweiten Steuerstellung beaufschlagt. Mit der Ausführung des Steuerschiebers als Stufenkolben und der Gehäusebohrung als Stufenbohrung wird dadurch erzielt, dass das Stelldruckventil in der Lage ist, ausreichende Stellmengen zur Betätigung der Stellkolbeneinrichtung zu erzeugen und der Verstellung des Verdrängervolumens der Axialkolbenmaschine eine gewünschte Dynamik zu verleihen.

Der Fertigungsaufwand der Gehäusebohrung als Stufenbohrung ist jedoch aufwändig, da die zwei Bohrungsdurchmesser der Stufenbohrung zum Erzielen einer geforderten Oberflächengüte mit zwei Reibahlen oder einem Stufenreibahl bearbeitet werden muss. Sofern die Axialkolbenpumpe zwei Stelldruckventile aufweist, die in einer gemeinsamen Gehäusebohrung angeordnet sind, wird der Bearbeitungsaufwand für die Gehäusebohrung der beiden Stelldruckventile noch weiter erhöht, da das Ventilgehäuse von zwei Seiten mit einem Stufenreibahl oder alternativ zwei Reibahlen bearbeitet werden muss.

Bei bekannten Stelldruckventilen, bei denen das Stelldruckventil einen als Stufenkolben ausgebildeten Steuerschieber aufweist, der in einer als Stufenbohrung ausgebildeten Gehäusebohrung eines Ventilgehäuses längsverschiebbar angeordnet ist, ist weiterhin die Anpassung des Stelldruckbereichs des Stelldruckventils aufwändig, da hierzu das Flächenverhältnis der Stufenbohrung und das Flächenverhältnis des Stufenkolbens verändert und angepasst werden muss, wobei durch die Anpassung des Flächenverhältnisses der Stufenbohrung der Stufenreibahl bzw. die Reibahle angepasst werden müssen.

Der vorliegenden Erfindung liegt die Aufgabe zugrunde, eine hydrostische Axialkolbenmaschine der eingangs genannten Gattung zur Verfügung zu stellen, bei der der Bauaufwand für das Stelldruckventil verringert ist.

Diese Aufgabe wird erfindungsgemäß dadurch gelöst, dass das Stelldruckventil einen in einer Gehäusebohrung eines Ventilgehäuses längsverschiebbar angeordneten Steuerschieber aufweist, der mit einer Längsbohrung versehen ist, die sich im Steuerschieber von einer Stirnfläche des Steuerschiebers zu einem Bohrungsgrund erstreckt, wobei in der Längsbohrung ein zylinderförmiger Abstützkörper längsverschiebbar angeordnet ist und der Bohrungsgrund als von dem Stelldruck beaufschlagte Steuerfläche ausgebildet ist.

Bei dem erfindungsgemäßen Stelldruckventil wird die Steuerfläche des Steuerschiebers, die von dem in der Stelldruckleitung anstehenden Stelldruck beaufschlagt ist, von der im Steuerschieber ausgebildeten Längsbohrung in Verbindung mit dem zylinderförmigen Abstützkörper erzeugt. Eine derartige Längsbohrung kann im Steuerschieber auf einfache Weise hergestellt werden. Bei dem erfindungsgemäßen Stelldruckventil ist es somit nicht mehr erforderlich, den Steuerschieber als Stufenkolben und die Gehäusebohrung als Stufenbohrung auszuführen, wodurch insbesondere der Fertigungsaufwand der Gehäusebohrung des Ventilgehäuses deutlich reduziert werden kann. Zudem ist bei dem erfindungsgemäßen Stelldruckventil durch Veränderung des Bohrungsdurchmessers der Längsbohrung und des Durchmessers des in der Längsbohrung aufgenommen zylinderförmigen Abstützkörpers eine einfache Anpassung des Stelldruckbereichs des Stelldruckventils möglich, ohne an der Gehäusebohrung des Ventilgehäuses Veränderungen durchführen zu müssen.

Gemäß einer vorteilhaften Ausführungsform der Erfindung die Längsbohrung als Sackbohrung ausgebildet. Eine derartige Sackbohrung kann in dem Steuerschieber von der Stirnfläche des Steuerschiebers aus in einfacher Weise eingebracht und hergestellt werden, wodurch die am Bohrungsgrund der Sackbohrung ausgebildete, vom Stelldruck beaufschlagte Steuerfläche in einfacher Weise am Steuerschieber hergestellt werden kann.

Gemäß einer vorteilhaften Ausführungsform der Erfindung sind an der Gehäusebohrung der erste Anschluss, der zweite Anschluss und der dritte Anschluss ausgebildet, wobei der zweite Anschluss in Längsrichtung der Gehäusebohrung zwischen dem ersten Anschluss und dem dritten Anschluss angeordnet ist, wobei der Steuerschieber mit einer Steuerausnehmung versehen ist, mittels der in der ersten Steuerstellung der erste Anschluss mit dem zweiten Anschluss verbindbar ist und mittels der in der zweiten Steuerstellung der zweite Anschluss mit dem dritten Anschluss verbindbar ist. Hierdurch ergibt sich eine einfache Fertigung und Herstellung des Stelldruckventils.

Gemäß einer vorteilhaften Ausführungsform der Erfindung ist in dem Steuerschieber ein vom Bohrungsgrund zur Steuerausnehmung geführter Steuerdruckkanal ausgebildet. Mit einem derartigen im Steuerschieber ausgebildeten Steuerdruckkanal kann in einfacher Weise bei in Richtung der ersten Steuerstellung beaufschlagtem Steuerschieber, wobei die Steuerausnehmung mit dem zweiten Anschluss in Verbindung steht, die am Bohrungsgrund ausgebildete Steuerfläche von dem in der Stelldruckleitung anstehenden Stelldruck beaufschlagt werden.

Gemäß einer vorteilhaften Ausführungsform der Erfindung ist der zylinderförmige Abstützkörper als Zylinderrolle, insbesondere Nadelrolle, ausgebildet. Hierdurch ist ein geringer Bauaufwand für den Abstützkörper erzielbar.

Gemäß einer vorteilhaften Ausführungsform der Erfindung ist der Steuerschieber von einer Feder in Richtung der zweiten Steuerstellung beaufschlagt, wobei die Feder in einem zwischen der Gehäusebohrung und dem Steuerschieber ausgebildeten Federraum angeordnet ist, der mit dem Behälter verbunden ist. Mit einer derartigen Federeinrichtung kann im nicht angesteuerten Zustand der Ansteuereinrichtung der Steuerschieber in einfacher Weise in die zweite Steuerstellung als Neutralstellung betätigt werden, in der die Stelldruckleitung mit dem Behälter verbunden ist.

Gemäß einer vorteilhaften Ausführungsform der Erfindung weist die Gehäusebohrung einen einheitlichen Durchmesser auf. Als eine Gehäusebohrung mit einem einheitlichen Durchmesser im Sinne der Erfindung ist eine Gehäusebohrung zu verstehen, die nicht als Stufenbohrung ausgebildet ist. Bei einer derartigen Gehäusebohrung mit einem einheitlichen Durchmesser kann die geforderte Oberflächengüte der Gehäusebohrung mit einem einzigen Reibahl erzielt werden, so dass sich ein deutlich verringerter Fertigungsaufwand für die Gehäusebohrung des Stelldruckventils erzielen lässt.

Gemäß einer vorteilhaften Ausführungsform der Erfindung sind zwei Stellventile vorgesehen, deren Steuerschieber in der Gehäusebohrung gegenüberliegend angeordnet sind, wobei ein einzelner zylinderförmiger Abstützkörper vorgesehen ist, der in den beiden Längsbohrungen der beiden Steuerschieber längsverschiebbar angeordnet ist. Zwei Stellventile werden insbesondere bei Axialkolbenmaschinen eingesetzt, die im geschlossenen Kreislauf betrieben sind. Durch die gegenüberliegende Anordnung der beiden Steuerschieber der beiden Stelldruckventile in der Gehäusebohrung des Ventilgehäuses wird es ermöglicht, für beide Steuerschieber nur eine einzigen zylinderförmigen Abstützkörper vorzusehen, so dass sich der Bauaufwand für die beiden Stelldruckventile durch eine Verringerung der Bauteile weiter verringern lässt. Zudem kann mit der gegenüberliegenden Anordnung der beiden Steuerschieber der beiden Stelldruckventile in der Gehäusebohrung des Ventilgehäuses die Fertigung der Gehäusebohrung weiter vereinfacht werden, da die Gehäusebohrung für die beiden Steuerschieber von einer Gehäuseseite aus mit nur einem Reibahl vollständig bearbeitet werden kann.

Gemäß einer vorteilhaften Ausführungsform der Erfindung ist zwischen den beiden Steuerschiebern der Federraum ausgebildet, wobei in dem Federraum eine einzelne Feder angeordnet ist, die mit beiden Steuerschiebern in Wirkverbindung steht. Durch die gegenüberliegende Anordnung der beiden Steuerschieber der beiden Stelldruckventile in der Gehäusebohrung des Ventilgehäuses wird es ermöglicht, für beide Steuerschieber nur eine einzige Feder vorzusehen, so dass sich der Bauaufwand für die beiden Stelldruckventile durch eine Verringerung der Bauteile weiter verringern lässt.

Die Erfindung weist eine Reihe von Vorteilen auf.

Die Stelldruckventile der erfindungsgemäßen Axialkolbenmaschine können mit geringem Fertigungsaufwand hergestellt werden, da nur eine durchgehende, mit einem einzigen Durchmesser ausgeführte Gehäusebohrung im Ventilgehäuse präzise herzustellen ist, die von einer Gehäuseseite aus vollständig bearbeitet werden kann. Für die Fertigung der Gehäusebohrung des Stelldruckventils sind keine Spezialwerkzeuge, wie beispielsweise Stufenreibahle, erforderlich. Die Ausführung des zylinderförmigen Abstützkörpers, der in der Längsbohrung des Steuerschiebers des Stelldruckventils angeordnet ist und die Funktion eines Druckmeldekolbens für den Stelldruck bei dem Stelldruckventil aufweist, als Nadelrolle, die als fertiges Bauteil zugekauft werden kann, stellt eine preiswerte Lösung für den zylinderförmiger Abstützkörper dar. Bei dem erfindungsgemäßen Stelldruckventil ist eine Anpassung des Stelldruckbereichs durch einfache Änderung des Durchmessers der Längsbohrung in dem Steuerschieber und Auswahl des zylinderförmigen Abstützkörpers mit einem an den Durchmesser der Längsbohrung angepassten Durchmesser möglich.

Weitere Vorteile und Einzelheiten der Erfindung werden anhand des in den schematischen Figuren dargestellten Ausführungsbeispiels näher erläutert. Hierbei zeigt
- Figur 1: einen Schaltplan einer erfindungsgemäßen Axialkolbenmaschine und
- Figur 2: die Stelldruckventile der Axialkolbenmaschine der Figur 1 in einem Längsschnitt.

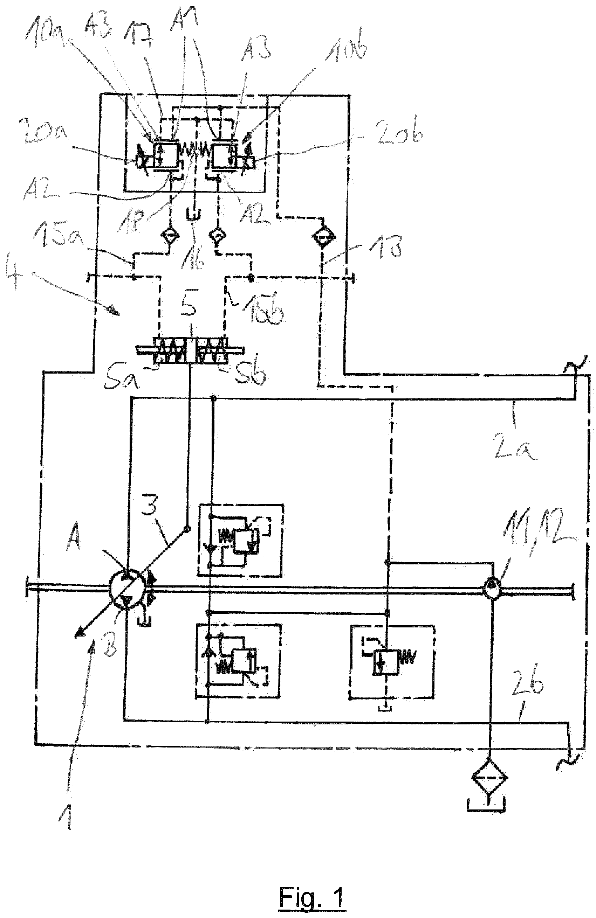

In der Figur 1 ist der Schaltplan einer erfindungsgemäßen hydrostatischen Antriebsmaschine 1 dargestellt. Die hydrostatische Antriebsmaschine 1 ist im dargestellten Ausführungsbeispiel als Axialkolbenpumpe ausgebildet, die im geschlossenen Kreislauf betrieben ist.

Von einem nicht näher dargestellten Antriebsmotor, beispielsweise einem Verbrennungsmotor oder einem Elektromotor, wird die als hydrostatische Axialkolbenpumpe ausgebildete Axialkolbenmaschine 1 angetrieben, die im geschlossenen Kreislauf mit mindestens einem nicht näher dargestellten hydraulischen Verbraucher, beispielsweise einem hydraulischen Motor eines Fahrantriebs oder eines Drehwerksantriebs, in Verbindung steht. Der geschlossene Kreislauf wird hierbei aus einer ersten Druckmittelleitung 2a und einer zweiten Druckmittelleitung 2b gebildet, wobei die erste Druckmittelleitung 2a mit einem ersten Druckanschluss A der Axialkolbenmaschine 1 und die zweite Druckmittelleitung 2b mit einem zweiten Druckanschluss B der Axialkolbenmaschine 1 in Verbindung steht.

Die Axialkolbenmaschine 1 ist als Verstellpumpe mit verstellbaren Verdrängervolumen ausgebildet und weist eine Fördervolumenstelleinrichtung 3 auf, beispielsweise eine als Wiege ausgebildete Schrägscheibe, die zur Verstellung mit einer Stelleinrichtung 4 in Wirkverbindung steht.

Die Stelleinrichtung 4 weist eine mit der Fördervolumenstelleinrichtung 3 in Wirkverbindung stehende, federzentrierte Stellkolbeneinrichtung 5 auf, die mit einem ersten Stelldruckraum 5a und einen zweiten Stelldruckraum 5b versehen ist.

Zur Steuerung der Beaufschlagung der Stelldruckräume 5a, 5b der Stellkolbeneinrichtung 5 sind bei der erfindungsgemäßen Axialkolbenmaschine 1 zwei Stelldruckventile 10a, 10b vorgesehen. Im dargestellten Ausführungsbeispiel sind die Stelldruckventile 10a, 10b jeweils als Proportional-Druckminderventile ausgebildet.

Das Stelldruckventil 10a ist ausgebildet, einen den Stelldruckraum 5a der Stellkolbeneinrichtung 5 beaufschlagenden Stelldruck zu erzeugen.

Das Stelldruckventil 10b ist ausgebildet, einen den Stelldruckraum 5b der Stellkolbeneinrichtung 5 beaufschlagenden Stelldruck zu erzeugen.

Das Stelldruckventil 10a, 10b steht jeweils an einem ersten Anschluss A1 mit einer Steuerdruckversorgungseinrichtung 11 in Verbindung steht, beispielsweise einer Steuerdruckpumpe 12. Eine Förderleitung 13 der Steuerdruckversorgungseinrichtung 11 ist hierzu jeweils mit dem Anschluss A1 des Stelldruckventils 10a, 10b verbunden.

Das Stelldruckventil 10a ist an einem zweiten Anschluss A2 mit einer zum Stelldruckraum 5a geführten Stelldruckleitung 15a verbunden. Das Stelldruckventil 10b ist an einem zweiten Anschluss A2 mit einer zum Stelldruckraum 5b geführten Stelldruckleitung 15b verbunden. An einem dritten Anschluss A3 ist das Stelldruckventil 10a, 10b jeweils mit einem Behälter 16 verbunden. An die Anschlüsse A3 der Stelldruckventile 10a, 10b ist hierzu eine zu dem Behälter 16 geführte Behälterleitung 17 angeschlossen.

Das erste Stelldruckventil 10a ist von einer Ansteuereinrichtung 20a, beispielsweise einem Proportional-Magnet, in Richtung einer den ersten Anschluss A1 mit dem zweiten Anschluss A2 verbindenden ersten Steuerstellung beaufschlagt. Das erste Stelldruckventil 10a ist von dem in der Stelldruckleitung 15a anstehenden Stelldruck in Richtung einer den zweiten Anschluss A2 mit dem dritten Anschluss A3 verbindenden zweiten Steuerstellung beaufschlagt. Das erste Stelldruckventil 10a ist weiterhin von einer Feder 18 in Richtung der zweiten Steuerstellung beaufschlagt.

Das zweite Stelldruckventil 10b ist von einer Ansteuereinrichtung 20b, beispielsweise einem Proportional-Magnet, in Richtung einer den ersten Anschluss A1 mit dem zweiten Anschluss A2 verbindenden ersten Steuerstellung beaufschlagt. Das zweite Stelldruckventil 10b ist von dem in der Stelldruckleitung 15b anstehenden Stelldruck in Richtung einer den zweiten Anschluss A2 mit dem dritten Anschluss A3 verbindenden zweiten Steuerstellung beaufschlagt. Das zweite Stelldruckventil 10b ist weiterhin von einer Feder 18 in Richtung der zweiten Steuerstellung beaufschlagt.

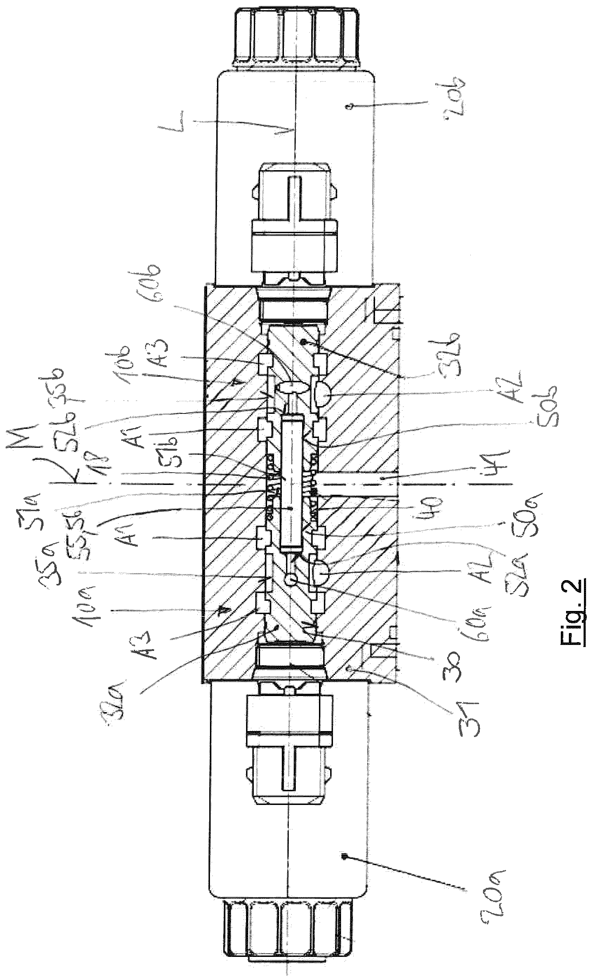

In der Figur 2 sind die beiden Stelldruckventile 10a, 10b der erfindungsgemäßen Axialkolbenmaschine 1 in einem Längsschnitt dargestellt.

Das Stelldruckventil 10a weist einen in einer Gehäusebohrung 30 eines Ventilgehäuses 31 längsverschiebbar angeordneten Steuerschieber 32a auf.

Das Stelldruckventil 10b weist einen in der Gehäusebohrung 30 des Ventilgehäuses 31 längsverschiebbar angeordneten Steuerschieber 32b auf.

Die beiden Steuerschieber 32a, 32b sind in der Gehäusebohrung 30 gegenüberliegend angeordnet, d.h. bezüglich einer Mittelebene M achssymmetrisch angeordnet.

An der Gehäusebohrung 30 sind für den Steuerschieber 32a des ersten Stelldruckventils 10a der erste Anschluss A1, der zweite Anschluss A2 und der dritte Anschluss A3 ausgebildet, wobei der zweite Anschluss A2 in Längsrichtung L der Gehäusebohrung 30 zwischen dem ersten Anschluss A1 und dem dritten Anschluss A3 angeordnet ist. Der Steuerschieber 32a des ersten Stelldruckventils 10a ist mit einer Steuerausnehmung 35a versehen, mittels der in der ersten Steuerstellung der erste Anschluss A1 mit dem zweiten Anschluss A2 verbindbar ist und mittels der in der zweiten Steuerstellung der zweite Anschluss A2 mit dem dritten Anschluss A3 verbindbar ist.

An der Gehäusebohrung 30 sind für den Steuerschieber 32b des zweiten Stelldruckventils 10b der erste Anschluss A1, der zweite Anschluss A2 und der dritte Anschluss A3 ausgebildet, wobei der zweite Anschluss A2 in Längsrichtung L der Gehäusebohrung 30 zwischen dem ersten Anschluss A1 und dem dritten Anschluss A3 angeordnet ist. Der Steuerschieber 32b des zweiten Stelldruckventils 10b ist mit einer Steuerausnehmung 35b versehen, mittels der in der ersten Steuerstellung der erste Anschluss A1 mit dem zweiten Anschluss A2 verbindbar ist und mittels der in der zweiten Steuerstellung der zweite Anschluss A2 mit dem dritten Anschluss A3 verbindbar ist.

Zur Ausbildung der Anschlüsse A1, A2, A3 können an der Gehäusebohrung 30 entsprechende Ringnuten vorgesehen sein.

Ein in axialer Längsrichtung L der Gehäusebohrung 30 ausgebildeter mittlerer Bereich der Gehäusebohrung 30, der axial zwischen den beiden Steuerschiebern 32a, 32b angeordnet ist, bildet einen Federraum 40, in dem die Feder 18 angeordnet ist, die an gegenüberliegenden Federenden mit den beiden Steuerschiebern 32a, 32b in Wirkverbindung steht. Der Federraum 40 ist mittels eines in dem Ventilgehäuse 31 ausgebildeten Kanals 41 mit dem Behälter 16 verbunden.

An der in der Figur 2 linken Stirnseite des Gehäuses 31 ist die Ansteuereinrichtung 20a angebaut, die zur Betätigung mit dem Steuerschieber 32a des Stelldruckventils 10a in Wirkverbindung steht.

An der in der Figur 2 rechten Stirnseite des Gehäuses 31 ist die Ansteuereinrichtung 20b angebaut, die zur Betätigung mit dem Steuerschieber 32b des Stelldruckventils 10b in Wirkverbindung steht.

Der Steuerschieber 32a des Stelldruckventils 10a ist mit einer Längsbohrung 50a versehen, die sich im Steuerschieber 32a von einer in der Figur 2 rechten Stirnfläche 51a des Steuerschiebers 32a zu einem Bohrungsgrund 52a erstreckt. Die Längsbohrung 50a ist konzentrisch zur Gehäusebohrung 30 angeordnet. In der Längsbohrung 50a ist ein zylinderförmiger Abstützkörper 55 längsverschiebbar angeordnet. Der Bohrungsgrund 52a ist als von dem mit dem Stelldruckventil 10a erzeugten Stelldruck beaufschlagte Steuerfläche ausgebildet.

Zur Beaufschlagung des Bohrungsgrundes 52a im Steuerschieber 32a mit dem von dem Stelldruckventil 10a erzeugten Stelldruck ist in dem Steuerschieber 32a ein vom Bohrungsgrund 52a zur Steuerausnehmung 35a geführter Steuerdruckkanal 60a ausgebildet.

Der Steuerschieber 32b des Stelldruckventils 10b ist mit einer Längsbohrung 50b versehen, die sich im Steuerschieber 32b von einer in der Figur 2 linken Stirnfläche 51b des Steuerschiebers 32b zu einem Bohrungsgrund 52b erstreckt. Die Längsbohrung 50b ist konzentrisch zur Gehäusebohrung 30 und somit fluchtend zu der Längsbohrung 50a angeordnet. In der Längsbohrung 50a ist der zylinderförmige Abstützkörper 55 längsverschiebbar angeordnet. Der Bohrungsgrund 52b ist als von dem mit dem Stelldruckventil 10b erzeugten Stelldruck beaufschlagte Steuerfläche ausgebildet.

Zur Beaufschlagung des Bohrungsgrundes 52b im Steuerschieber 32b mit dem von dem Stelldruckventil 10b erzeugten Stelldruck ist in dem Steuerschieber 32b ein vom Bohrungsgrund 52b zur Steuerausnehmung 35b geführter Steuerdruckkanal 60b ausgebildet.

Die Längsbohrung 50a, 50b ist jeweils als Sackbohrung ausgebildet, die in dem Steuerschieber 32a, 32b von der Stirnfläche 51a, 51b aus in den entsprechenden Steuerschieber 32a, 32b eingearbeitet ist.

Wie aus der Figur 2 ersichtlich ist, sind die beiden Steuerschieber 32a, 32b mit den Stirnflächen 51a, 51b, die in dem mittigen Federraum 40 angeordnet sind, einander zugewandt in der Gehäusebohrung 30 angeordnet. Die beiden Steuerschieber 32a, 32b sind als Gleichteile ausgebildet, die eine identische Gestalt haben.

Der zylinderförmige Abstützkörper 55 ist als Zylinderrolle 56, beispielsweise als Nadelrolle, ausgebildet. Die Zylinderrolle 56 ist im Außendurchmesser an den Durchmesser der Längsbohrungen 50a, 50b der Steuerschieber 32a, 32b angepasst, so dass sich zwischen der Zylinderrolle 56 und den Längsbohrungen 50a, 50b ein abdichtender Spalt ergibt.

Die Gehäusebohrung 30, in der die beiden Steuerschieber 32a, 32b längsverschiebbar angeordnet sind, weist - abgesehen von den gegebenenfalls ausgebildeten Ringnuten für die Anschlüsse A1, A2, A3 - eine einen einheitlichen Durchmesser auf. Die geforderte Oberflächengüte der Gehäusebohrung 30 kann mit einem einzigen Reibahl erzielt werden, wobei die Gehäusebohrung 30 über die gesamte Länge von einer Gehäuseseite aus vollständig bearbeitet werden kann.

Für die beiden Stelldruckventile 10a, 10b ist lediglich eine einzige Feder 18 und ein einziger zylinderförmiger Abstützkörper 55 erforderlich.

## Patentansprüche

1. Hydrostatische Axialkolbenmaschine (1), insbesondere Axialkolbenpumpe, mit verstellbarem Verdrängervolumen, wobei das Verdrängervolumen mittels einer Stelleinrichtung (4) einstellbar ist, wobei die Stelleinrichtung (4) eine Stellkolbeneinrichtung (5) aufweist, die mindestens einen Stelldruckraum (5a; 5b) aufweist, wobei die Stelleinrichtung (4) mindestens ein Stelldruckventil (10a; 10b), insbesondere ein Druckminderventil, aufweist, das ausgebildet ist, einen den Stelldruckraum (5a; 5b) der Stellkolbeneinrichtung (5) beaufschlagenden Stelldruck zu erzeugen, wobei das Stelldruckventil (10a; 10b) an einem ersten Anschluss (A1) mit einer Steuerdruckversorgungseinrichtung (11) in Verbindung steht, an einem zweiten Anschluss (A2) mit einer zum Stelldruckraum (5a; 5b) geführten Stelldruckleitung (15a; 15b) verbunden ist und an einem dritten Anschluss (A3) mit einem Behälter (16) verbunden ist, wobei das Stelldruckventil (10a; 10b) von einer Ansteuereinrichtung (20a; 20b), beispielsweise einem Magnet, in Richtung einer den ersten Anschluss (A1) mit dem zweiten Anschluss (A2) verbindenden ersten Steuerstellung beaufschlagt ist und von dem in der Stelldruckleitung (15a; 15b) anstehenden Stelldruck in Richtung einer den zweiten Anschluss (A2) mit dem dritten Anschluss (A3) verbindenden zweiten Steuerstellung beaufschlagt ist, **dadurch gekennzeichnet, dass** das Stelldruckventil (10a; 10b) einen in einer Gehäusebohrung (30) eines Ventilgehäuses (31) längsverschiebbar angeordneten Steuerschieber (32a; 32b) aufweist, der mit einer Längsbohrung (50a; 50b) versehen ist, die sich im Steuerschieber (32a; 32b) von einer Stirnfläche (51a; 51b) des Steuerschiebers (32a; 32b) zu einem Bohrungsgrund (52a; 52b) erstreckt, wobei in der Längsbohrung (50a; 50b) ein zylinderförmiger Abstützkörper (55) längsverschiebbar angeordnet ist und der Bohrungsgrund (52a; 52b) als von dem Stelldruck beaufschlagte Steuerfläche ausgebildet ist.

2. Hydrostatische Axialkolbenmaschine (1) nach Anspruch 1, **dadurch gekennzeichnet, dass** die Längsbohrung (50a; 50b) als Sackbohrung ausgebildet ist.

3. Hydrostatische Axialkolbenmaschine (1) nach Anspruch 1 oder 2, **dadurch gekennzeichnet, dass** an der Gehäusebohrung (30) der erste Anschluss (A1), der zweite Anschluss (A2) und der dritte Anschluss (A3) ausgebildet sind, wobei der zweite Anschluss (A2) in Längsrichtung (L) der Gehäusebohrung (30) zwischen dem ersten Anschluss (A1) und dem dritten Anschluss (A3) angeordnet ist, wobei der Steuerschieber (32a; 32b) mit einer Steuerausnehmung (35a; 35b) versehen ist, mittels der in der ersten Steuerstellung der erste Anschluss (A1) mit dem zweiten Anschluss (A2) verbindbar ist und mittels der in der zweiten Steuerstellung der zweite Anschluss (A2) mit dem dritten Anschluss (A3) verbindbar ist.

4. Hydrostatische Axialkolbenmaschine (1) nach Anspruch 3, **dadurch gekennzeichnet, dass** in dem Steuerschieber (32a; 32b) ein vom Bohrungsgrund (52a; 52b) zur Steuerausnehmung (35a; 35b) geführter Steuerdruckkanal (60a; 60b) ausgebildet ist.

5. Hydrostatische Axialkolbenmaschine (1) nach einem der Ansprüche 1 bis 4, **dadurch gekennzeichnet, dass** der zylinderförmige Abstützkörper (55) als Zylinderrolle (56), insbesondere Nadelrolle, ausgebildet ist.

6. Hydrostatische Axialkolbenmaschine (1) nach einem der Ansprüche 1 bis 5, **dadurch gekennzeichnet, dass** der Steuerschieber (32a; 32b) von einer Feder (18) in Richtung der zweiten Steuerstellung beaufschlagt ist, wobei die Feder (18) in einem zwischen der Gehäusebohrung (30) und dem Steuerschieber (32a; 32b) ausgebildeten Federraum (40) angeordnet ist, der mit dem Behälter (16) verbunden ist.

7. Hydrostatische Axialkolbenmaschine (1) nach einem der Ansprüche 1 bis 6, **dadurch gekennzeichnet, dass** die Gehäusebohrung (30) einen einheitlichen Durchmesser aufweist.

8. Hydrostatische Axialkolbenmaschine (1) nach einem der Ansprüche 1 bis 7, **dadurch gekennzeichnet, dass** zwei Stellventile (10a, 10b) vorgesehen sind, deren Steuerschieber (32a, 32b) in der Gehäusebohrung (30) gegenüberliegend angeordnet sind, wobei ein einzelner zylinderförmiger Abstützkörper (55) vorgesehen ist, der in den beiden Längsbohrungen (50a, 50b) der beiden Steuerschieber (32a, 32b) längsverschiebbar angeordnet ist.

9. Hydrostatische Axialkolbenmaschine (1) nach Anspruch 8, **dadurch gekennzeichnet, dass** zwischen den beiden Steuerschiebern (32a, 32b) der Federraum (40) ausgebildet ist, wobei in dem Federraum (40) eine einzelne Feder (18) angeordnet ist, die mit beiden Steuerschiebern (32a, 32b) in Wirkverbindung steht.

## Claims

1. Hydrostatic axial piston machine (1), in particular axial piston pump, with adjustable displacement volume, wherein the displacement volume is adjustable by means of an actuating device (4), wherein the actuating device (4) has an actuating piston device (5), which has at least one actuating pressure chamber (5a; 5b), wherein the actuating device (4) has at least one actuating pressure valve (10a; 10b), in particular a pressure reducing valve, which is designed to generate an actuating pressure loading the actuating pressure chamber (5a; 5b) of the actuating piston device (5), wherein the actuating pressure valve (10a; 10b) is connected at a first port (A1) to a control pressure supply device (11), at a second port (A2) to an actuating pressure line (15a; 15b) routed to the actuating pressure chamber (5a; 5b), and at a third port (A3) to a vessel (16), wherein the actuating pressure valve (10a; 10b) is loaded by an activating device (20a; 20b), for example a magnet, in the direction of a first control position connecting the first port (A1) to the second port (A2), and is loaded in the direction of a second control position connecting the second port (A2) to the third port (A3) by the actuating pressure prevailing in the actuating pressure line (15a; 15b), **characterized in that** the actuating pressure valve (10a; 10b) has a control slide (32a; 32b) which is arranged longitudinally displaceably in a housing bore (30) of a valve housing (31) and is provided with a longitudinal bore (50a; 50b), which extends in the control slide (32a; 32b) from a front face (51a; 51b) of the control slide (32a; 32b) to a bore bottom (52a; 52b), wherein a cylindrical support body (55) is arranged longitudinally displaceably in the longitudinal bore (50a; 50b), and the bore bottom (52a; 52b) is formed as a control surface loaded by the actuating pressure.

2. Hydrostatic axial piston machine (1) according to Claim 1, **characterized in that** the longitudinal bore (50a; 50b) is formed as a blind bore.

3. Hydrostatic axial piston machine (1) according to Claim 1 or 2, **characterized in that** the first port (A1), the second port (A2) and the third port (A3) are formed on the housing bore (30), wherein the second port (A2) is arranged in the longitudinal direction (L) of the housing bore (30) between the first port (A1) and the third port (A3), wherein the control slide (32a; 32b) is provided with a control recess (35a; 35b), by means of which, in the first control position, the first port (A1) is connectable to the second port (A2) and by means of which, in the second control position, the second port (A2) is connectable to the third port (A3).

4. Hydrostatic axial piston machine (1) according to Claim 3, **characterized in that** a control pressure channel (60a; 60b) routed from the bore bottom (52a; 52b) to the control recess (35a; 35b) is formed in the control slide (32a; 32b).

5. Hydrostatic axial piston machine (1) according to one of Claims 1 to 4, **characterized in that** the cylindrical support body (55) is formed as a cylindrical roller (56), in particular a needle roller.

6. Hydrostatic axial piston machine (1) according to any one of Claims 1 to 5, **characterized in that** the control slide (32a; 32b) is loaded by a spring (18) in the direction of the second control position, wherein the spring (18) is arranged in a spring chamber (40) formed between the housing bore (30) and the control slide (32a; 32b), which is connected to the vessel (16).

7. Hydrostatic axial piston machine (1) according to any one of Claims 1 to 6, **characterized in that** the housing bore (30) has a uniform diameter.

8. Hydrostatic axial piston machine (1) according to any one of Claims 1 to 7, **characterized in that** two control valves (10a, 10b) are provided, whose control slides (32a, 32b) are arranged opposite each other in the housing bore (30), wherein a single cylindrical support body (55) is provided, which is arranged longitudinally displaceably in the two longitudinal bores (50a, 50b) of the two control slides (32a, 32b).

9. Hydrostatic axial piston machine (1) according to Claim 8, **characterized in that** the spring chamber (40) is formed between the two control slides (32a, 32b), wherein a single spring (18) which is in active contact with the two control slides (32a, 32b) is arranged in the spring chamber (40).

## Revendications

1. Machine hydrostatique (1) à pistons axiaux, en particulier pompe à pistons axiaux, présentant un volume de refoulement réglable, le volume de refoulement étant réglable au moyen d'un dispositif de réglage (4), le dispositif de réglage (4) présentant un dispositif (5) à piston de réglage, qui présente au moins une chambre de pression de réglage (5a ; 5b), le dispositif de réglage (4) présentant au moins une soupape de pression de réglage (10a ; 10b), en particulier une soupape de réduction pression, qui est conçue pour générer une pression de réglage sollicitant la chambre de pression de réglage (5a ; 5b) du dispositif à piston de réglage (5), la soupape de pression de réglage (10a ; 10b) étant en liaison, au niveau d'un premier raccord (A1), avec un dispositif d'alimentation en pression de commande (11), en liaison, au niveau d'un deuxième raccord (A2), avec une conduite de pression de réglage (15a ; 15b) guidée vers l'espace de pression de réglage (5a ; 5b) et en liaison, au niveau d'un troisième raccord (A3), avec un récipient (16), la soupape de pression de réglage (10a ; 10b) étant sollicitée par un dispositif de pilotage (20a ; 20b), par exemple un aimant, en direction d'une première position de commande reliant le premier raccord (A1) au deuxième raccord (A2) et sollicitée par la pression de réglage qui existe dans la conduite de pression de réglage (15a ; 15b) en direction d'une seconde position de commande reliant le deuxième raccord (A2) au troisième raccord (A3), **caractérisée en ce que** la soupape de pression de commande (10a ; 10b) présente un tiroir de commande (32a ; 32b) agencé de manière à pouvoir se déplacer longitudinalement dans un alésage (30) de corps d'un corps (31) de soupape, lequel tiroir est pourvu d'un alésage allongé (50a, 50b), qui s'étend dans le tiroir de commande (32a ; 32b) depuis une face frontale (51a ; 51b) du tiroir de commande (32a ; 32b) jusqu'à un fond (52a ; 52b) d'alésage, un corps d'appui cylindrique (55) étant agencé de manière à pouvoir se déplacer longitudinalement dans l'alésage longitudinal (50a ; 50b) et le fond (52a ; 52b) d'alésage étant conçu comme une surface de commande sollicitée par la pression de réglage.

2. Machine hydrostatique (1) à pistons axiaux selon la revendication 1, **caractérisée en ce que** l'alésage longitudinal (50a ; 50b) est conçu comme un alésage borgne.

3. Machine hydrostatique (1) à pistons axiaux selon la revendication 1 ou 2, **caractérisée en ce que** le premier raccord (A1), le deuxième raccord (A2) et le troisième raccord (A3) sont conçus au niveau de l'alésage (30) de corps, le deuxième raccord (A2) étant agencé, dans la direction longitudinale (L) de l'alésage (30) de corps, entre le premier raccord (A1) et le troisième raccord (A3), le tiroir de commande (32a ; 32b) étant pourvu d'un évidement de commande (35a ; 35b) au moyen duquel, dans la première position de commande, le premier raccord (A1) peut être relié au deuxième raccord (A2) et au moyen duquel, dans la seconde position de commande, le deuxième raccord (A2) peut être relié au troisième raccord (A3).

4. Machine hydrostatique (1) à pistons axiaux selon la revendication 3, **caractérisée en ce qu'**un canal de pression de commande (60a ; 60b) allant depuis le fond (52a ; 52b) d'alésage à l'évidement de commande (35a ; 35b) est conçu dans le tiroir de commande (32a ; 32b).

5. Machine hydrostatique (1) à pistons axiaux selon l'une des revendications 1 à 4, **caractérisée en ce que** le corps d'appui cylindrique (55) est conçu comme un rouleau cylindrique (56), en particulier comme un rouleau à aiguilles.

6. Machine hydrostatique (1) à pistons axiaux selon l'une des revendications 1 à 5, **caractérisée en ce que** le tiroir de commande (32a ; 32b) est sollicité par un ressort (18) en direction de la seconde position de commande, le ressort (18) étant agencé dans une chambre (40) à ressort conçue entre l'alésage (30) de corps et le tiroir de commande (32a ; 32b), laquelle chambre est reliée au récipient (16).

7. Machine hydrostatique (1) à pistons axiaux selon l'une des revendications 1 à 6, **caractérisée en ce que** l'alésage (30) de corps présente un diamètre uniforme.

8. Machine hydrostatique (1) à pistons axiaux selon l'une des revendications 1 à 7, **caractérisée en ce que** deux soupapes de réglage (10a ; 10b) sont prévues, dont les tiroirs de commande (32a ; 32b) sont agencés l'un en face de l'autre dans l'alésage (30) de corps, un seul corps d'appui cylindrique (55) étant prévu, qui est agencé de manière à pouvoir se déplacer longitudinalement dans les deux alésages longitudinaux (50a ; 50b) des deux tiroirs de commande (32a ; 32b).

9. Machine hydrostatique (1) à pistons axiaux selon la revendication 8, **caractérisée en ce que** la chambre (40) à ressort est conçue entre les deux tiroirs de commande (32a ; 32b), un seul ressort (18), qui est en liaison active avec les deux tiroirs de commande (32a ; 32b), étant agencé dans la chambre (40) à ressort.
